# EUROPEAN PATENT SPECIFICATION

(11) **EP 2 620 251 B1**
(45) Date of publication and mention of the grant of the patent: **13.08.2014**
(21) Application number: 12189817.5
(22) Date of filing: 24.10.2012
(51) Int. Cl.: B23Q 1/01, B23Q 3/155

(54) **Machine tool with a tool magazine**
Werkzeugmaschine mit einem Werkzeugmagazin
Machine-outil avec un magasin à outils

(30) Priority: 30.01.2012 JP 2012017096
(43) Date of publication of application: 31.07.2013
(73) Proprietor: Brother Kogyo Kabushiki Kaisha, Nagoya-shi, Aichi 467-8561 (JP)
(72) Inventor: Ito, Keishi, Nagoya-shi, Aichi 467-8562 (JP); Tsuji, Shunsuke, Nagoya-shi, Aichi 467-8562 (JP); Hayashi, Shozo, Nagoya-shi, Aichi 467-8562 (JP)
(74) Representative: Prüfer & Partner GbR European Patent Attorneys

(56) References cited:
- EP-A2- 2 374 573
- DE-U1- 20 111 119
- FR-A1- 2 511 282

## Description

### BACKGROUND

### 1. Technical Field

The present invention relates to a machine tool that allows an endless connection body holding tools to be circulated along a given circulation path and allows the tool held by the endless connection body to be mounted in a spindle to machine a work.

### 2. Description of Related Art

A machine tool performs various types of machining. Such a machine tool includes a tool magazine containing a plurality of tools. The machine tool exchanges the tool, taken out from the tool magazine, for the tool mounted in a spindle, thus performing intended machining.

Japanese Patent Application Laid-Open Publication No. Hei 11-48076 discloses a tool storage apparatus (tool magazine) and a machine tool equipped with the tool storage apparatus. The tool storage apparatus has a chain, sprockets and a containing base. The chain is formed into an endless manner by alternately connecting inner and outer links. Tool pots for accommodating tools are connected to the outer links. The chain runs between the sprockets. The sprocket is connected to a drive source such as a motor, and the drive source is driven, thereby conveying the desired tool pot (tool) to an exchange position at which the tools are to be exchanged. The tool pots, which are circulated with the chain, are brought into contact with an inner wall surface of an outer peripheral portion of the containing base along most part of a movement path. The inner wall surface restricts the attitude of the tool pots.

However, in order to allow a large number of tools to be storaged in the tool storage apparatus, the chain must be increased in length, which leads to an increase in the number of the links. Accordingly, the number of components is increased, resulting in a cost increase.

When the chain is circulated at a high speed in order to speedily exchange the tools, breakdown locations will be increased due to an increase in the number of the links; thus, durability of the chain will be reduced, and in addition, noise caused by fluttering of the links will be increased.

FR 2 511 282 A1 discloses a generic machine tool according to the preamble of claim 1. In FR 2 511 282 A1, a circular gear is engaged with and driven by two gears.

Other machine tools are known from EP 2 374 573 A2 and DE 201 11 119 U1.

It is the object of the present invention to provide a machine tool in which the number of links of an endless connection body holding tools to be mounted in a spindle for machining a work is reduced and the number of the held tools is increased.

This object is achieved by the machine tool having the features of claim 1. The invention is further developed as defined in the dependent claims.

The engaging part, located between the ends of the holder in the moving direction, is engaged with the rotation gear, and the plurality of moving bodies are interlocked with rotation of the rotation gear and moved along the given circulation path. The plurality of moving bodies each hold a plurality of tools by the holder so that the tools are arranged in the moving direction, thereby reducing the number of the moving bodies and the number of links.

In a machine tool according to Technical Idea 2, the engaging part is formed by a plurality of shaft members provided on the holder.

The plurality of shaft members are engaged and interlocked with the rotation gear, and thus the moving bodies move along the circulation path.

In a machine tool according to Technical Idea 3, the engaging part is formed by the plurality of shaft members provided on the same arc on the holder.

When the circulation path has an arc-shaped region, the shaft members of the plurality of moving bodies located at the arc-shaped region can be arranged on the same arc concentric with the arc-shaped region. The rotation gear is located inwardly of the arc-shaped region, and is engaged with the shaft members arranged on the same arc.

In a machine tool according to Technical Idea 4, the engaging part is formed by the five or more shaft members, and connectors connecting the adjacent moving bodies are provided on the shaft members other than outermost ones of the shaft members.

Suppose that the connectors are provided on the shaft members other than the outermost ones of the shaft members; then, as for a distance between the shaft members which are connected with the connectors and arranged in the moving direction, the distance measured when the moving bodies are located on a straight line and the distance measured when the moving bodies are located on an arc have a smaller difference compared with a case where the connectors are provided on the outermost shaft members. Hence, the machine tool can suppress occurrence of internal load between the moving bodies, and allows the moving bodies to move smoothly.

In a machine tool according to Technical Idea 5, the engaging part is formed by the six shaft members provided at even intervals on the arc, and the connectors are provided on the second shaft members from the outermost ones of the shaft members.

As for a distance on the circulation path connecting the connectors at one side of the moving direction of the two moving bodies adjacent to each other, the distance measured when the moving bodies are located on a straight line and the distance measured when the moving bodies are located on an arc have a smaller difference compared with a case where the connectors for the adjacent moving bodies are provided on the outermost shaft members.

In a machine tool according to Technical Idea 6, a plate member connecting tips of the shaft members is provided for each of the moving bodies.

The tips of the shaft members are connected by the plate member, thus achieving an increase in strength.

In a machine tool according to the present invention, the machine tool further includes a supporter for supporting the spindle so that the spindle is movable in one axial direction, and the plurality of moving bodies are located along an elliptical region surrounding the spindle and the supporter.

The plurality of moving bodies are located along the elliptical region surrounding the spindle and the supporter, thus increasing the length of the endless connection body in which the plurality of moving bodies are connected to each other in an endless manner, and increasing the number of the held tools.

In the machine tool according to the present invention, the plurality of moving bodies each hold a plurality of tools by the holder so that the tools are arranged in the movement direction, thus making it possible to reduce the number of the moving bodies and the number of the links.

### BRIEF DESCRIPTION OF THE DRAWINGS

FIG. 1 is a perspective view showing a machine tool;
FIG. 2 is a front view showing the machine tool;
FIG. 3 is a right side view showing the machine tool;
FIG. 4 is a perspective view showing the machine tool, with the cover for covering a tool exchanging device and a guide rail, etc. omitted;
FIG. 5 is a fragmentary sectional view simply showing a spindle head;
FIG. 6 is a perspective view simply showing a rail section;
FIG. 7 is a perspective view simply showing a tool magazine;
FIG. 8 is a perspective view simply showing a moving carriage;
FIG. 9 is a perspective view simply showing the moving carriage mounted on the rail;
FIG. 10 is a top view simply showing a base plate of the moving carriage;
FIG. 11 is a top view simply showing the moving carriage and grip arms;
FIG. 12 is a perspective view simply showing a cam mechanism, a grip arm, and a positioning mechanism;
FIG. 13 is an enlarged perspective view simply showing the cam mechanism;
FIG. 14 is a perspective view simply showing the grip arm;
FIG. 15 is an enlarged perspective view simply showing the positioning mechanism;
FIG. 16 is a right side view simply showing the cam mechanism, the grip arm, and the positioning mechanism when the spindle head is right in the upward movement;
FIG. 17 is a right side view simply showing the cam mechanism, the grip arm, and the positioning mechanism when the spindle head is right in the upward movement;
FIG. 18 is an enlarged front view simply showing positioning operation using the positioning mechanism;
FIG. 19 is a right side view simply showing the cam mechanism, the grip arm, and the positioning mechanism when the spindle head is right in the upward movement;
FIG. 20 is a right side view simply showing the cam mechanism, grip arm and the positioning mechanism when the spindle head has reached a conveyance position.
FIG. 21 is a right side view simply showing the cam mechanism, the grip arm, and the positioning mechanism when the spindle head is right in the downward movement;
FIG. 22 is a right side view simply showing the cam mechanism, the grip arm, and the positioning mechanism when the spindle head is right in the downward movement;
FIG. 23 is a right side view simply showing the cam mechanism, the grip arm, and the positioning mechanism when the spindle head is right in the downward movement;
FIG. 24 is a right side view simply showing the cam mechanism, the grip arm, and the positioning mechanism when the spindle head is right in the downward movement;
FIG. 25 is a schematic diagram for describing distances between connecting shaft members on a straight line and on an arc;
FIG. 26 is a schematic diagram for describing how distances between the connecting shaft members on a straight line are obtained;

### DETAILED DESCRIPTION

### Embodiment

Machine tools according to Embodiments of the present invention will be described on the side of the accompanying drawings. In the following descriptions, the up-down direction, the left-right direction, and the front-rear direction indicated by the arrows shown in the drawings are used. The worker operates a machine tool in front thereof and mounts/dismounts work.

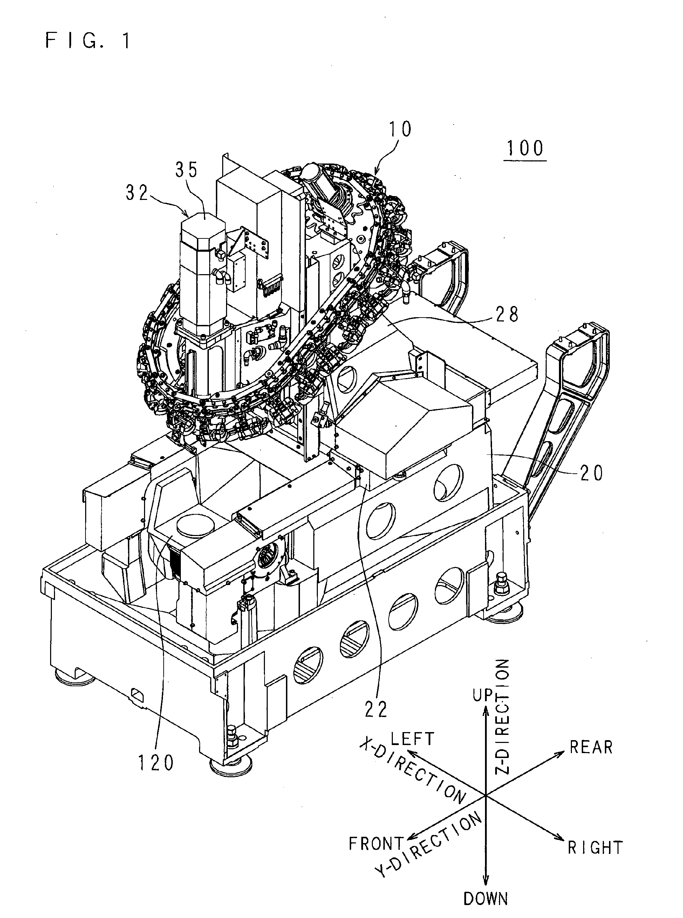

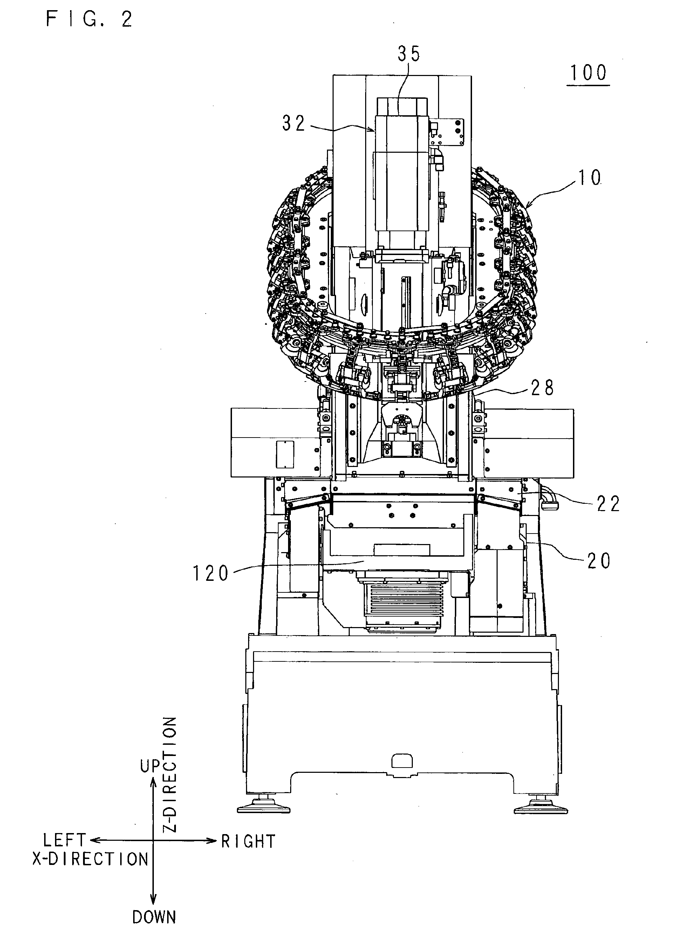

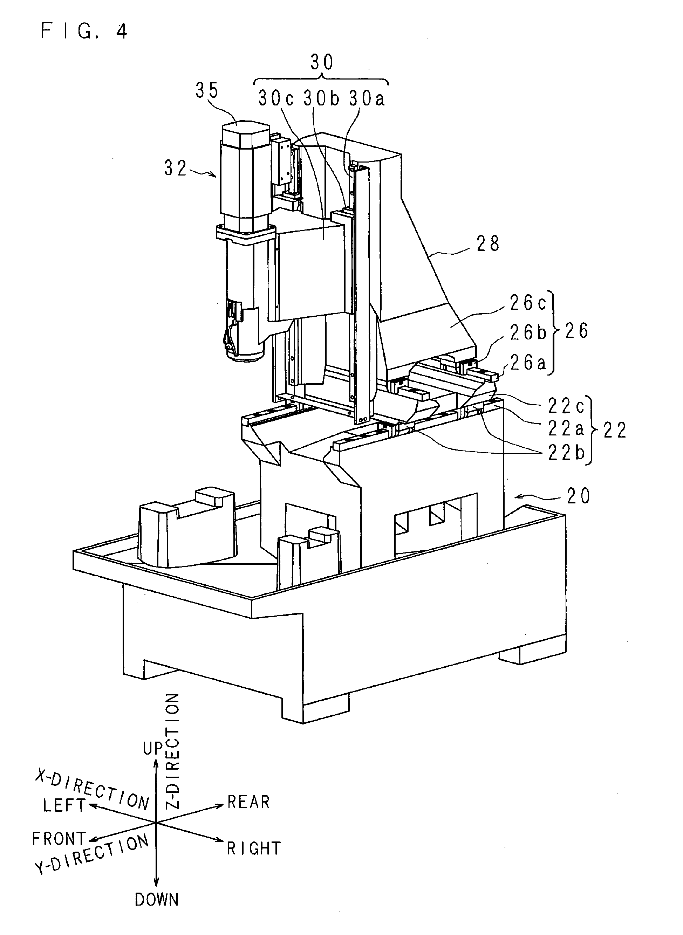

Referring to FIGS. 1 to 4, a machine tool 100 will be described. A machine tool 100 has a base 20, a Y-direction moving device 22, an X-direction moving device 26, a column 28, a Z-direction moving device 30, a spindle head 32, a tool exchanging device 10, etc. The base 20 is secured onto the face of the floor. The base 20 supports the column 28 so that the column (supporter) 28 is movable in the X-direction (the left-right direction) and in the Y-direction (the front-rear direction) via the Y-direction moving device 22 and the X-direction moving device 26. The base 20 supports a work holding device 120 that is used to hold work serving as an object to be machined while driving the work around two axes. The column 28 movably supports the spindle head 32 in the Z-direction (the up-down direction) via the Z-direction moving device 30. The tool exchanging device 10 exchanges tools to be mounted in the spindle head 32.

The Y-direction moving device 22 has a pair of guide rails 22a and 22a being parallel with each other, a plurality of blocks 22b, 22b, ..., a Y-direction moving carriage 22c, and a Y-direction drive motor (not shown). The guide rails 22a and 22a extend in the front-rear direction on the upper face of the base 20 with an appropriate clearance therebetween in the left-right direction. The blocks 22b, 22b, ... are fitted on the guide rails 22a and 22a so as to be movable in the front-rear direction. The Y-direction moving carriage 22c is secured onto the blocks 22b, 22b, ... The Y-direction moving carriage 22c is moved in the front-rear direction by the drive of the Y-direction drive motor.

The X-direction moving device 26 has a pair of guide rails 26a and 26a being parallel with each other, a plurality of blocks 26b, 26b, ..., a column base 26c, and an X-direction drive motor (not shown). The guide rails 26a and 26a extend in the left-right direction on the upper face of the Y-direction moving carriage 22c with an appropriate clearance therebetween in the front-rear direction. The blocks 26b, 26b, ... are movably fitted on the guide rails 26a and 26a in the left-right direction. The column base 26c is secured onto the blocks 26b, 26b, ... The column 28 is moved in the left-right direction by the drive of the X-direction drive motor.

The column 28 has a columnar shape and is secured onto the column base 26c. The column 28 is moved in the Y-direction and the X-direction by the Y-direction moving device 22 and the X-direction moving device 26.

The Z-direction moving device 30 has a pair of guide rails 30a and 30a being parallel with each other, a plurality of blocks 30b, 30b, ..., a spindle head base 30c, a Z-direction moving motor (not shown). The guide rails 30a and 30a extend in the up-down direction on the front face of the column 28 with an appropriate clearance therebetween in the left-right direction. The blocks 30b, 30b, ... are movably fitted on the guide rails 30a and 30a in the up-down direction. The spindle head base 30c is secured onto the front faces of the blocks 30b, 30b, ... The spindle head base 30c is moved in the up-down direction by the drive of the Z-direction drive motor.

The spindle head 32 is secured to the spindle head base 30c. The spindle head 32 is moved in the front-rear direction, the left-right direction, and the up-down direction by driving and controlling the X-direction drive motor, the Y-direction drive motor, and the Z-direction moving motor.

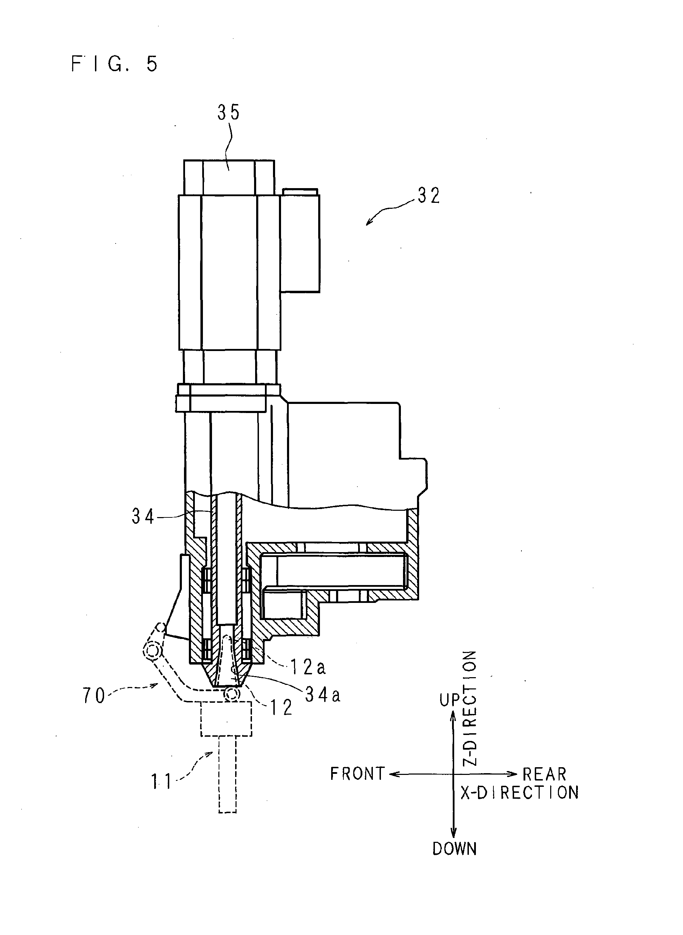

As shown in FIG. 5, the spindle head 32 rotatably holds a spindle 34 extending in the Z-direction in the inside thereof on the front side. The spindle 34 removably holds a tool holder 11 at the lower end section thereof. The tool holder 11 has a cylindrical shape, and a tool is mounted therein. The spindle 34 has a hollow cylindrical shape and has a tapered bore 34a, the inside diameter of which increases in the downward direction to the lower end section. A tapered mounting section 12 formed on the upper section of the tool holder 11 is fitted in the tapered bore 34a, whereby the tool holder 11 is mounted in the spindle 34.

Above the tapered bore 34a of the spindle 34, a draw bar (not shown) is inserted so as to be movable in the axial direction of the spindle 34. A clamp spring (not shown) is disposed around the draw bar. The clamp spring biases the draw bar upward. The lower end section of the draw bar has a grip section (not shown). When the tool holder 11 is mounted in the spindle 34, the grip section grips a pull stud 12a protruding upward from the tapered mounting section 12. Since the draw bar is biased upward, the grip section keeps gripping the pull stud 12a.

The spindle head 32 has a pressing mechanism (not shown) above the draw bar. The pressing mechanism presses the draw bar downward against the elastic force of the clamp spring. When the draw bar is pressed downward, the grip section releases the gripping of the pull stud 12a. When the grip section releases the gripping of the pull stud 12a, the tool holder 11 is dismounted from the spindle 34.

The spindle 34 is connected to a spindle motor 35 provided at the upper end of the spindle head 32. The spindle 34 is rotated around its axis by the drive of the spindle motor 35. The spindle 34 is rotated around its axis with the tool holder 11 mounted at the lower end thereof, and the work secured to the work holding device 120 is machined by the rotation.

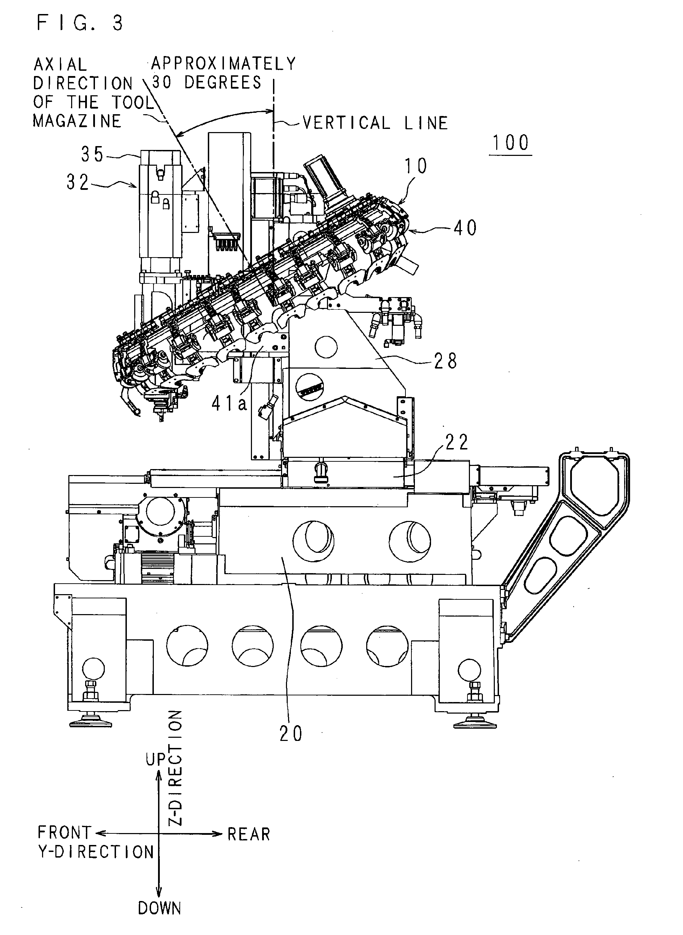

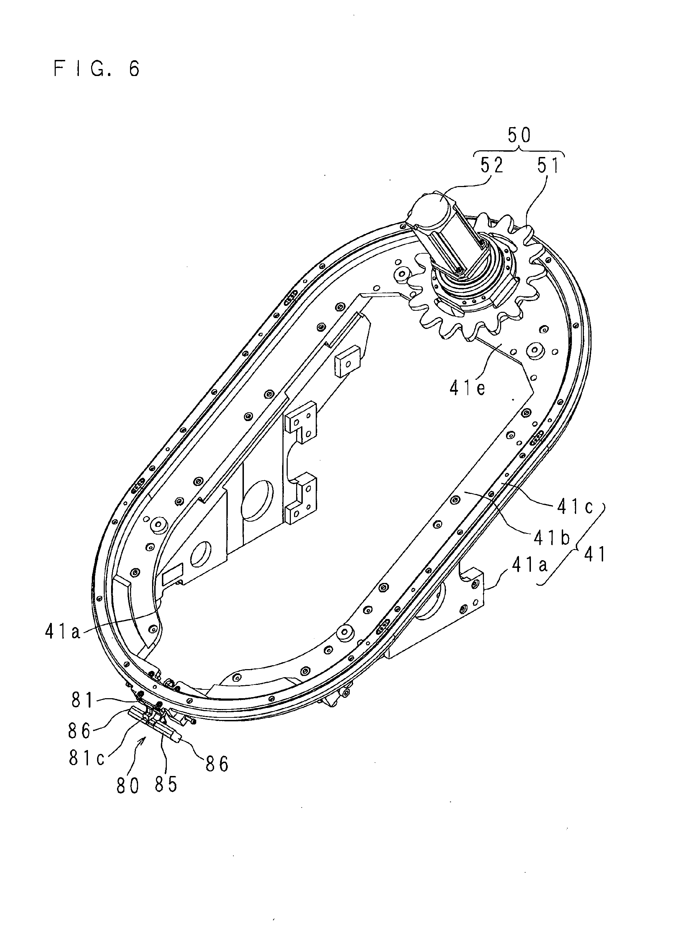

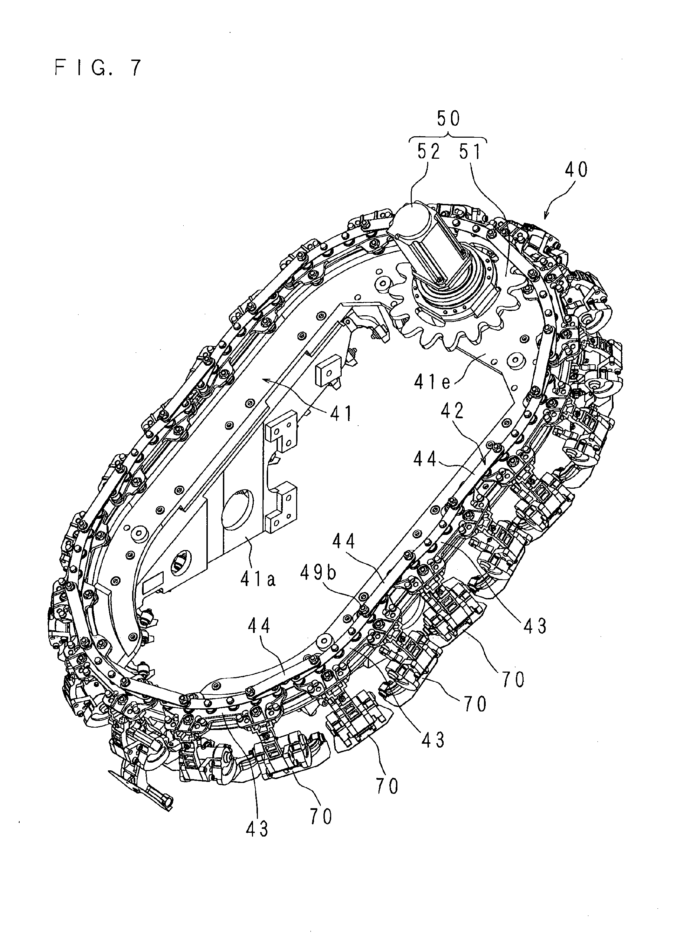

The tool exchanging device 10 has a tool magazine 40 (see FIGS. 3 and 7) and a magazine drive section 50 (see FIGS. 6 and 7). The tool exchanging device 10 conveys a plurality of tool holders 11, and each of the tool holders 11 is mounted and dismounted at the lower end section of the spindle 34. The tool magazine 40 has a rail section 41 and a chain section 42. The rail section 41 has support beams 41a and 41a (see FIG. 3), a rail base 41b, and a rail 41c.

Each of the support beams 41a and 41a is a triangular plate member, the upper side of which is an oblique side inclined downward in the forward direction. The support beams 41a and 41a are secured to the left and right sides of the column 28 in a cantilever manner. The support beams 41a and 41a extend from the portions secured to the left and right sides of the column 28 to both side portions of the spindle head 32 so as to be inclined downward in the forward direction. Upper end faces of the support beams 41a, 41a are inclined from lower front positions thereof to upper rear positions thereof with respect to a horizontal plane by about 30 degrees.

The rail base 41b is an elliptic annular member and is secured to the support beams 41a and 41a so as to enclose the column 28 and the spindle head 32. The rail base 41b extends from the front lower side to the rear upper side thereof along the upper end faces of the support beams 41a and 41a while being inclined approximately 30 degrees from the horizontal plane. The semicircular portion on the rear side of the rail base 41b is provided so that a plate-shaped mounting base 41e extends from the periphery of the semicircular portion. The mounting base 41e supports the magazine drive section 50.

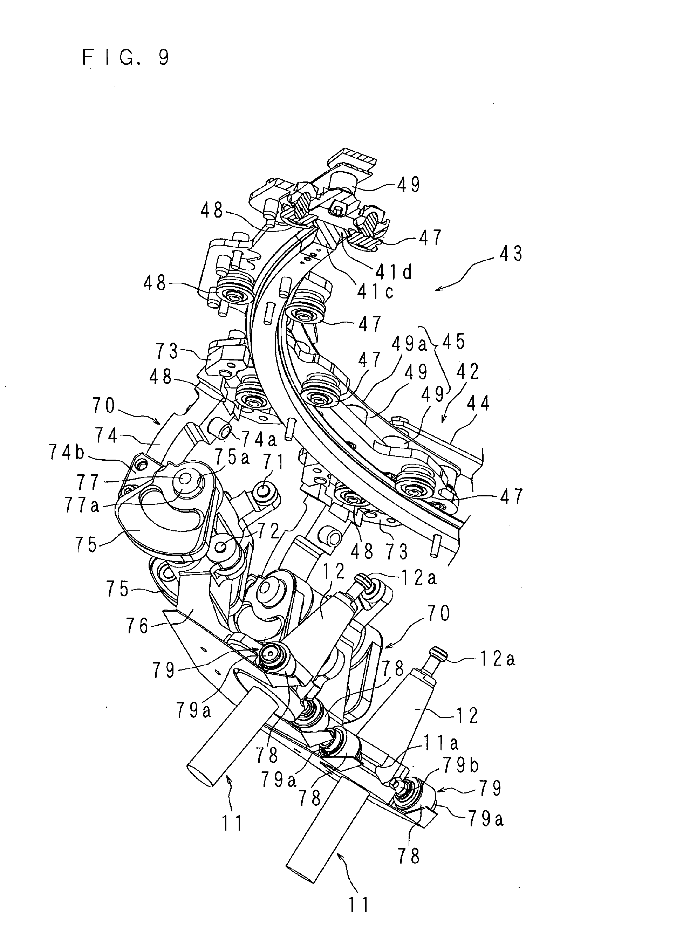

The rail 41c has a nearly rectangular shape in vertical cross section, and an elliptic endless rail is formed on the rail base 41b (see FIG. 6). As shown in FIG. 9, the rail 41c has elliptic flange-shaped fitting sections 41d and 41d formed respectively on the inner circumferential side face and the outer circumferential side face of the rail 41c. The fitting sections 41d and 41d are fitted in the V-grooves of inner rollers 47 and outer rollers 48.

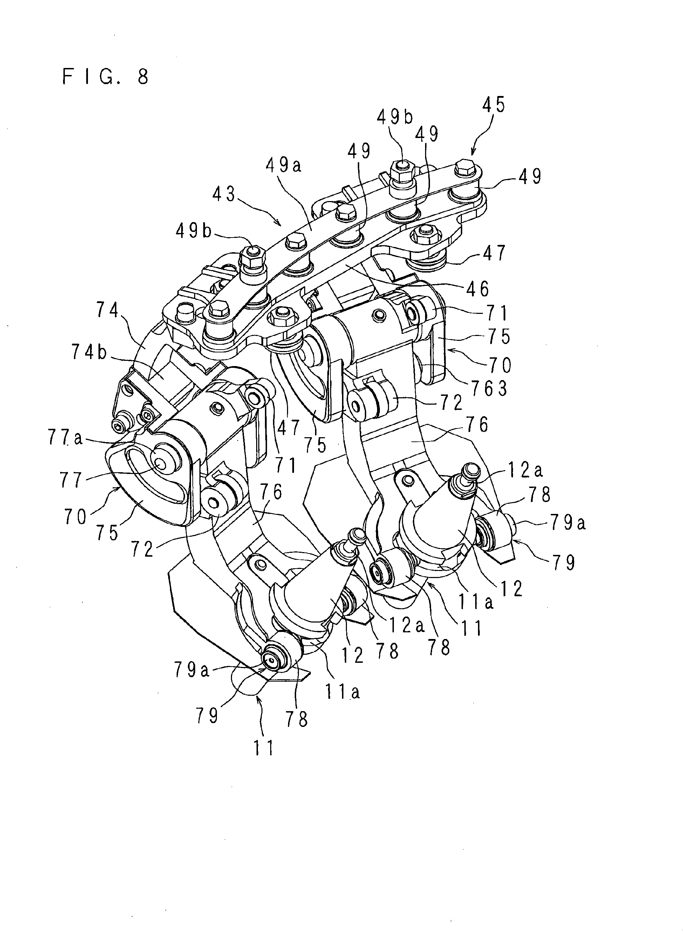

As shown in FIGS. 7 and 9, the chain section 42 has a plurality of moving carriages (moving bodies) 43, 43, ..., a plurality of link members (connectors) 44, 44, ..., a plurality of grip arms 70, 70, .... The rail 41c supports the plurality (for example, 11) of moving carriages 43, 43, ..., and the moving carriages 43, 43, ... are movable on the rail 41c. Each of the link members 44, 44, ... connects the moving carriages 43 and 43 being adjacent to each other. The plurality of moving carriages 43, 43, ... and the plurality of link members 44, 44, ... form an endless chain. As shown in FIGS. 7 to 9, the plurality (for example, 22) of grip arms 70, 70, .... are connected to the lower sections of the moving carriages 43, 43, ... and grip the tool holders 11.

The moving carriages 43, 43, ... of the tool magazine 40 circulate along the rail 41c, and the tool holder 11 gripped by each grip arm 70 is positioned at the exchange position below the spindle 34. Since the rail base 41b is disposed so as to be inclined approximately 30 degrees from the horizontal plane, the axial direction of the tool magazine 40 is inclined approximately 30 degrees toward the spindle head 32 from the vertical line (see FIG. 3).

Each moving carriage 43 includes a base plate (holder) 46, the inner rollers 47, 47, the outer rollers 48, 48, and an engaging part 45. The base plate 46 has a nearly rectangular shape and supports the inner rollers 47 and 47 and the outer rollers 48 and 48 on its lower face so that the rollers 47, 48 are rotatable around their axes in the normal direction of the lower face. Each of the inner rollers 47 and 47 and the outer rollers 48 and 48 has a disc shape and has a V-groove around the outer circumference thereof. The V-grooves of the inner rollers 47 and 47 are fitted on the fitting section 41d provided on the inner circumferential side face of the rail 41c, and the V-grooves of the outer rollers 48 and 48 are fitted on the fitting section 41d provided on the outer circumferential side face of the rail 41c.

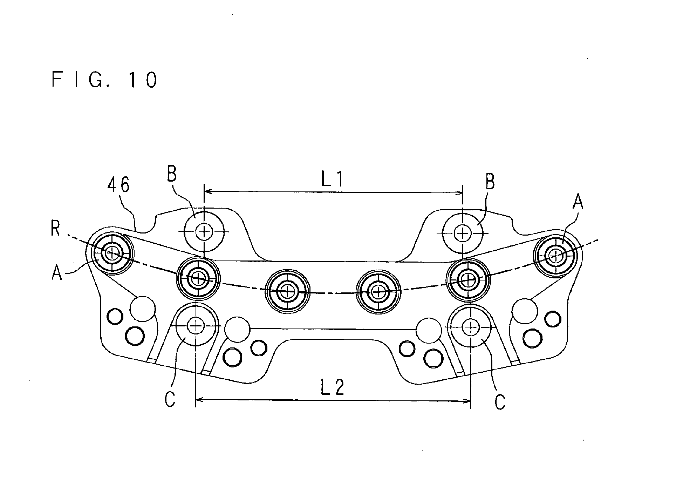

As shown in FIG. 10, the inner rollers 47, 47 are provided at two points B of the base plate 46, and the outer rollers 48, 48 are provided at two points C thereof. A distance L1 between axial centers of the inner rollers 47, 47 is shorter than a distance L2 between axial centers of the outer rollers 48, 48, thus reducing variations in fitting gaps between the rollers 47, 48 and the fitting sections 41d, 41d in a straight line region and an arc-shaped region of the rail 41c having an elliptical shape.

The engaging part 45 includes six pins (shaft members) 49, 49, ... and a flange 49a. The pins 49, 49, ... are provided on an upper surface of the base plate 46. When the moving carriage 43 is located at a semicircular region of the rail 41c, the pins 49, 49, ... on the moving carriage 43 are arranged on a circumference concentric with the semicircle. As shown in FIG. 10, the pins 49, 49, ... are located on an arc R. The pins 49, 49, ... are located at six points A between ends of a moving direction in which the moving carriage 43 moves on the rail 41c. The plurality of pins 49, 49, ... are engaged with a gear 51. A distance between axial centers of the pins 49, 49, ... adjacent to each other is defined as a straight line distance between pitch points for one pitch of the gear 51. The pins 49, 49, ... are formed by rotatably fitting cylindrical collars to outer peripheries of fixed shaft members, for example. The collars are rotated while being engaged with the gear 51, thereby reducing friction and abrasion. Upper ends of the pins 49, 49, ... are connected to each other through the flange (plate member) 49a, thus increasing strength of the pins 49, 49, ... as a whole.

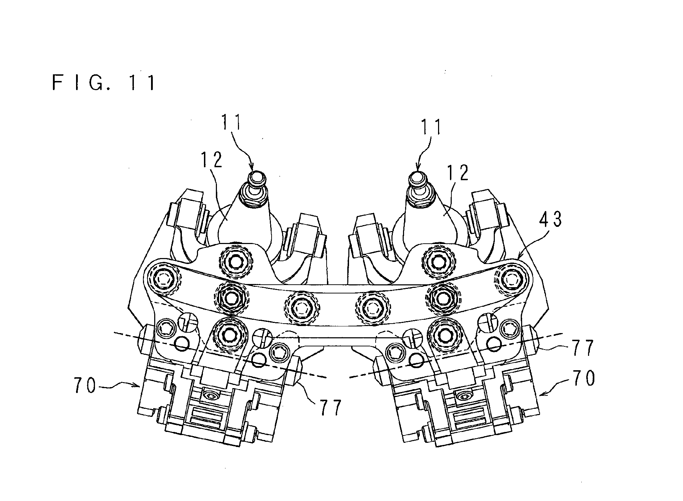

Each of the link members 44, 44, ... is used to connect the moving carriages 43 and 43 adjacent to each other. In each moving carriage 43, connecting shaft members 49b and 49b are provided on the second pins 49 and 49 of the six pins 49, 49, ... from both ends of the moving carriage 43. The link members 44, 44, ... are connected to the moving carriages 43 via the connecting shaft members 49b and 49b. Two of the grip arms 70, 70, .... are mounted at the lower section of each of the moving carriages 43, 43, ... An arm section 76 of each grip arm 70 is rocked around an axial center of an arm shaft 77, and a lower tip of each grip arm 70, which grips the tool holder 11, is brought close to and away from the lower end section of the spindle 34, thus allowing the tools to be exchanged. As shown in FIG. 11, an axial center direction of each arm shaft 77 corresponds to a direction extending along an arc on which the pins 49, 49, ... are arranged, and thus corresponds to a direction extending along a circumference of a semicircular region of the elliptical rail 41c. When the moving carriage 43 is located at the semicircular region of the elliptical rail 41c, a plane which includes an axis of the tool holder 11 and to which the axial center direction of the arm shaft 77 is normal passes through a center point of the semicircular region of the rail 41c.

As shown in FIG. 7, the magazine drive section 50 includes the gear (rotation gear) 51 and a magazine drive motor 52 which are provided on the mounting base 41e. The gear 51 is an external gear having a trochoidal tooth surface, for example, and is rotatably installed on the upper face of the mounting base 41e. The face of the gear is nearly parallel with the upper face of the mounting base 41e. The gear 51 is engaged with the pins 49, 49, ... on the moving carriage 43 located at the semicircular region of the rail 41c. The diameter of the gear 51 is smaller (for example, approximately 1/2) than the diameter of the semicircular portion of the rail 41c. Since the diameter of the gear 51 is small, the tool magazine 40 can be made compact without mechanically interfering with the column 28.

The rotation shaft (not shown) of the magazine drive motor 52 is directly connected to the shaft of the gear 51 to rotate and drive the gear 51. When the gear 51 is rotated, the gear 51 pushes the pins 49, 49, ... mounted on the moving carriage 43 in the tangential direction of the circumference of the rail 41c. The moving carriage 43 is moved on the rail 41c by the rotation of the gear 51. The magazine drive motor 52 rotates the gear 51 to convey the moving carriage 43. When tool exchange is performed, the tool magazine 40 conveys a predetermined grip arm 70 to the exchange position (at the front lower end section of the rail base 41b) below the spindle 34.

The grip arm 70 is rocked by a cam mechanism 60 and exchanges the tool holder 11 to be mounted in the spindle 34. A tool has been mounted beforehand in the tool holder 11.

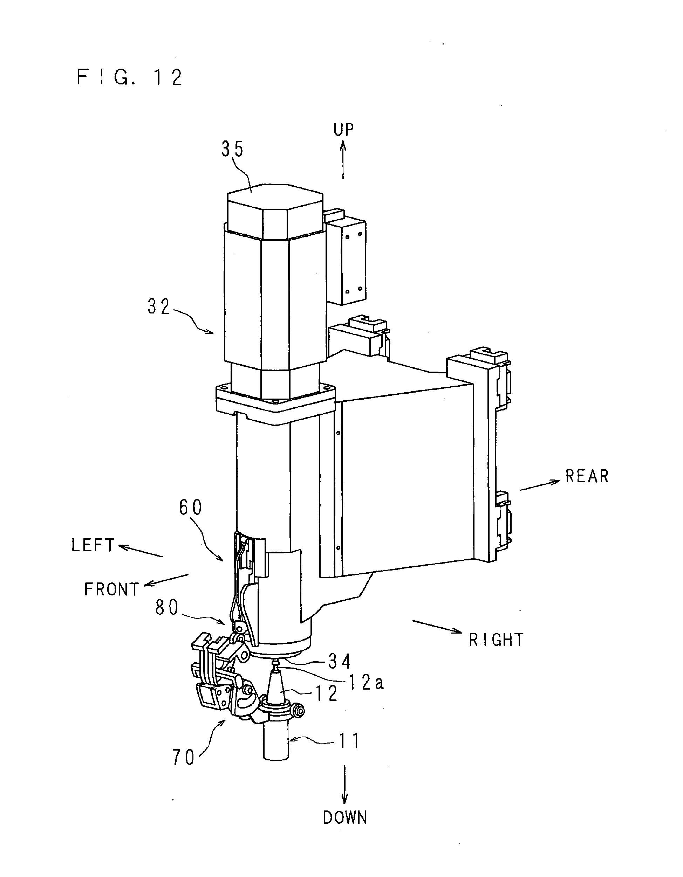

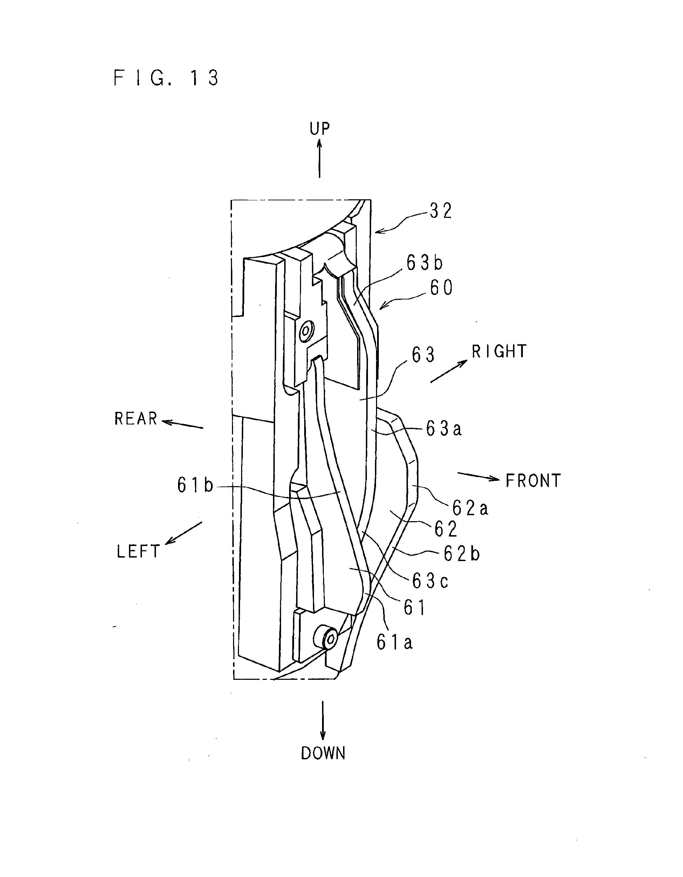

As shown in FIGS. 12 and 13, the cam mechanism 60 is installed on the front face of the spindle head 32. The cam mechanism 60 has an approaching cam 61, a separating cam 62, and a positioning cam 63. The approaching cam 61, the separating cam 62, and the positioning cam 63 each have a plate shape extending long in the up-down direction and protruding from the front face of the spindle head 32. The approaching cam 61, the positioning cam 63, and the separating cam 62 are arranged from left to right in this order. The protruding width (the width in the front-rear direction) of the approaching cam 61 decreases in the upward direction from the apex 61a thereof located slightly above the lower end. On the lower side of the approaching cam 61 from the apex 61a, the protruding width (the width in the front-rear direction) decreases in the downward direction. The approaching cam 61 has a cam face 61b increasing in height from the upper end in the downward direction in a tapered shape and connected to the apex 61a.

The separating cam 62 has a flat apex section 62a at a portion slightly above the central section in the up-down direction, and the protruding width (the width in the front-rear direction) thereof decreases in the downward direction. On the upper side of the separating cam 62 from the apex section 62a, the protruding width decreases in the upward direction. The separating cam 62 has a cam face 62b increasing in height from the lower end in the upward direction in a tapered shape and connected to the apex section 62a.

The upper end section of the approaching cam 61 is located above the upper end section of the separating cam 62, and the lower end section of the separating cam 62 is located below the lower end section of the approaching cam 61. The apex section 62a of the separating cam 62 is away from the apex 61a of the approaching cam 61 in the up-down direction, and the positions of the approaching cam 61 and the separating cam 62 in the front-rear direction are nearly the same. The inclination angle of the cam face 61b and the inclination angle of the cam face 62b from the up-down direction are approximately the same, but the directions thereof are opposite to each other.

The positioning cam 63 has a flat section 63a having a constant protruding width at the central section thereof in the up-down direction. On the upper side from the flat section 63a of the positioning cam 63, the protruding width decreases in the upward direction. On the lower side from the flat section 63a of the positioning cam 63, the protruding width decreases in the downward direction. The upper end section of the positioning cam 63 has an upper cam face 63b increasing in height from the upper end in a tapered shape and connected to the flat section 63a, and the lower end section thereof has a lower cam face 63c increasing in height from the lower end in a tapered shape and connected to the flat section 63a. The inclination angles of the upper cam face 63b and the lower cam face 63c from the up-down direction are approximately the same as the inclination angles of the cam face 61b and the cam face 62b.

The upper end of the positioning cam 63 is located above the upper end of the approaching cam 61. The lower end of the positioning cam 63 is located at a position approximately the same as the lower end of the approaching cam 61. The flat section 63a is located more rearward than the apex section 62a, and the height of the flat section 63a is lower than that of the apex section 62a.

The approaching cam 61 and the separating cam 62 make contact with a first cam follower 71 and a second cam follower 72, respectively, and the positioning cam 63 makes contact with a positioning cam follower 83.

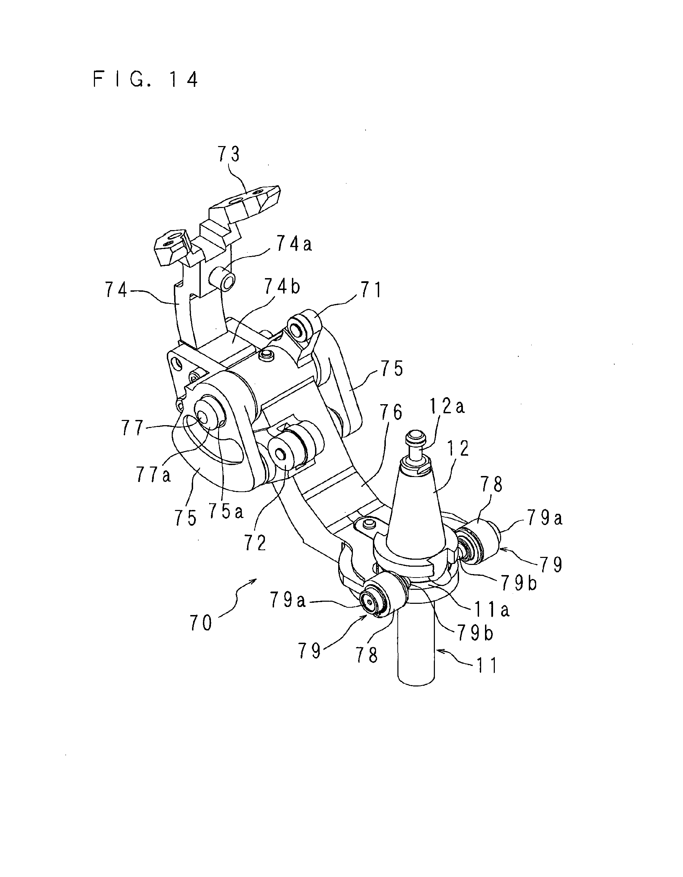

As shown in FIG. 14, the grip arm 70 has mounting plates 73 that are installed on the moving carriage 43. A support rod 74 is connected to the mounting plates 73, and the support rod 74 protrudes downward from the mounting plates 73. The support rod 74 has a positioning pin 74a that makes contact with a pin receiving section 81c. The positioning pin 74a protrudes rearward from the support rod 74.

The support rod 74 has a block 74b at the lower end section thereof. Guide plates 75, 75 for guiding rocking of the arm section 76 are fixed to right and left lateral faces of each block 74b. The guide plates 75, 75 face each other. In side view, each guide plate 75 has a fan shape expanding downward from an upper end thereof serving as a base point.

The upper end section of the guide plate 75 has an arm shaft hole 75a into which the arm shaft 77 is inserted. The positioning pin 74a passes through the support rod 74 in a direction orthogonal to the axial direction of the arm shaft hole 75a and in a direction orthogonal to the up-down direction and protrudes from the support rod 74.

The upper section of an arm section 76 is located between the two guide plates 75 and 75. The arm section 76 extends in the up-down direction and has a bent shape. The arm shaft 77 (center shaft) is secured to the upper end section of the arm section 76, and both end sections of the arm shaft 77 protrude from both sides of the upper end section of the arm section 76. Tapers 77a and 77a are formed at both end sections of the arm shaft 77. The arm shaft 77 is rockably inserted into the arm shaft holes 75a and 75a of the guide plates 75 and 75.

The lower end section of the arm section 76 is bifurcated. The arm section 76 has holding cylinders 78 and 78 at the tip end sections of the bifurcated lower end section. The axial direction of the holding cylinders 78 and 78 is the same as that of the arm shaft 77. The holding cylinders 78 and 78 hold the grip pin units 79 and 79. The grip arm 70 is installed on the moving carriage 43 so that the arm shaft 77 is placed along the rail 41c.

As shown in FIG. 14, each grip pin unit 79 has a holder 79a having a closed cylinder shape and a pin 79b accommodated in the holder 79a. The tip end section of the pin 79b protrudes from the holder 79a, and a spring (not shown) inside the holder 79a biases the pin 79b in the protruding direction. The tip end face of the pin 79b has a curved shape protruding outward. The tip end faces of the pins 79b and 79b are opposed to each other, and each grip pin unit 79 is inserted into each holding cylinder 78 and secured thereto. The pins 79b and 79b are used to mount and dismount the tool holder 11 (the tool held in the tool holder 11).

The lower side of the tapered mounting section 12 of the tool holder 11 has a groove 11a around the entire circumference thereof. When the tool holder 11 is inserted between the pins 79b and 79b, the pins 79b and 79b are fitted in the groove 11a, thereby holding the tool holder 11.

The first cam follower 71 making contact with the approaching cam 61 is provided above the arm shaft 77. The first cam follower 71 protrudes upward. The first cam follower 71 is a circular roller and rotates around an axis in parallel with the arm shaft 77. The second cam follower 72 making contact with the separating cam 62 is provided near the arm shaft 77 of the arm section 76. The second cam follower 72 is a circular roller and rotates around an axis in parallel with the arm shaft 77.

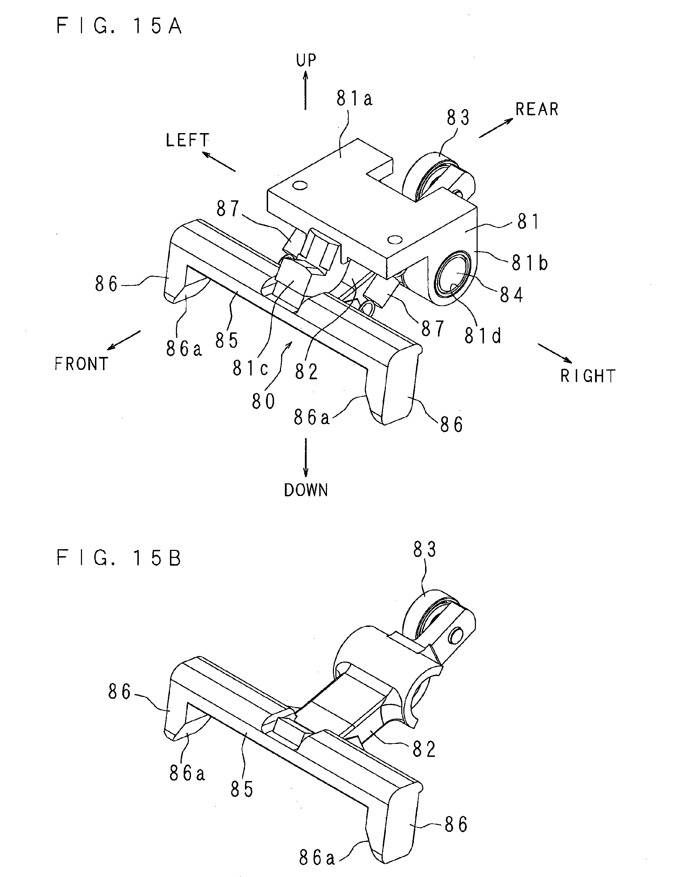

As shown in FIGS. 6, 12, and 15, a positioning mechanism 80 is provided on the rail base 41b. The positioning mechanism 80 is used to align the positions of the tool and the spindle 34. The positioning mechanism 80 has a base 81 secured to the lower end section of the rail base 41b. The lower end section of the rail base 41b is located at the exchange position.

The base 81 has a mounting plate 81a, extension sections 81b and 81b, and the pin receiving section 81c. The mounting plate 81a has a rectangular upper face, and the upper face is secured to the lower face of the lower end section of the rail base 41b. The pin receiving section 81c is L-shaped in side view and has a portion extending downward from the front section of the mounting plate 81a and a portion protruding forward from the tip end of the portion in parallel with the front-rear direction.

The extension sections 81b and 81b extend downward respectively from both side sections of the mounting plate 81a. The extension sections 81b and 81b have a block shape and are opposed to each other. Positioning shaft holes 81d and 81d passing through the extension sections 81b and 81b are provided at the lower ends of the extension sections 81b and 81b. The axial centers of the positioning shaft holes 81d and 81d are coincident with each other. A rotation rod 82 is provided between the extension sections 81b and 81b so as to intersect the axial centers of the positioning shaft holes 81d and 81d. The rotation rod 82 is inclined so that its front side is inclined downward.

The rotation rod 82 is provided with a rotation shaft 84 that is nearly orthogonal to the rotation rod 82. The rotation shaft 84 is rotatably inserted into the two positioning shaft holes 81d and 81d. The rear end section of the rotation rod 82 rotatably supports the positioning cam follower 83. The positioning cam follower 83 is a cylindrical roller that is rotatable around an axis in parallel with the rotation shaft 84. The front end section of the rotation rod 82 is provided with a rod member 85 extending in parallel with the rotation shaft 84. The rod member 85 is connected to the base 81 via springs 87 and 87. The front end section of the rotation rod 82 is connected to the central section of the rod member 85.

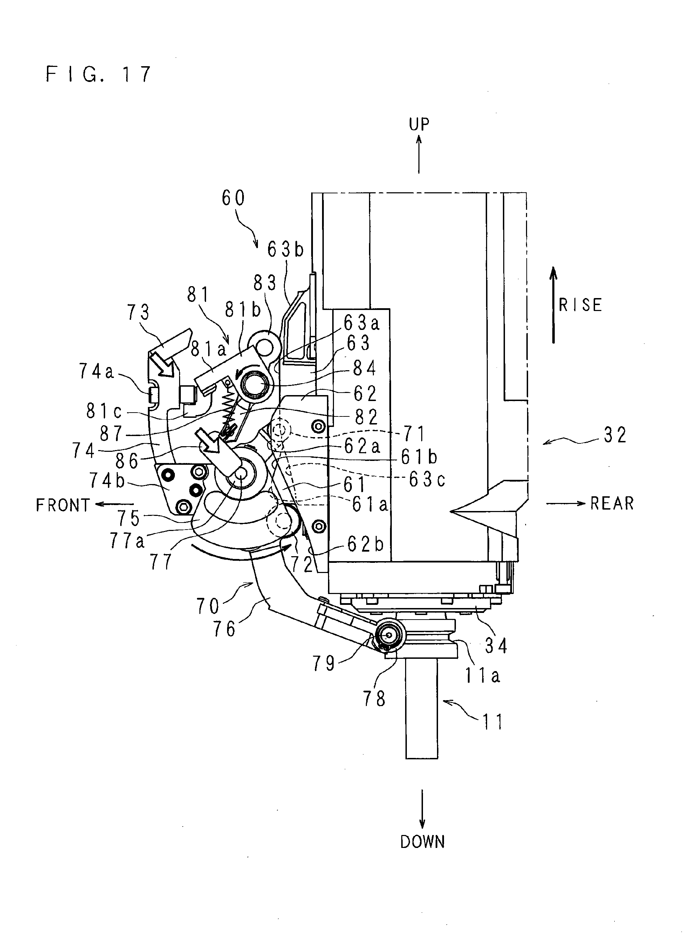

Both end sections of the rod member 85 are respectively provided with positioning pieces 86 and 86 extending downward. Each positioning piece 86 has a block shape. The positioning pieces 86 and 86 are opposed to each other, and the opposed portions are respectively provided with inclined faces 86a and 86a. The width of the inclined face 86a of the positioning piece 86 in the left-right direction decreases toward the lower end thereof. The inclination angle of the inclined face 86a is nearly the same as the inclination angle of the taper 77a. The dimension between the positioning pieces 86 and 86 is equal to or slightly larger than the axial dimension of the arm shaft 77. The springs 87 and 87 bias the positioning pieces 86 and 86 clockwise (see FIG. 17) around the rotation shaft 84 in right side view.

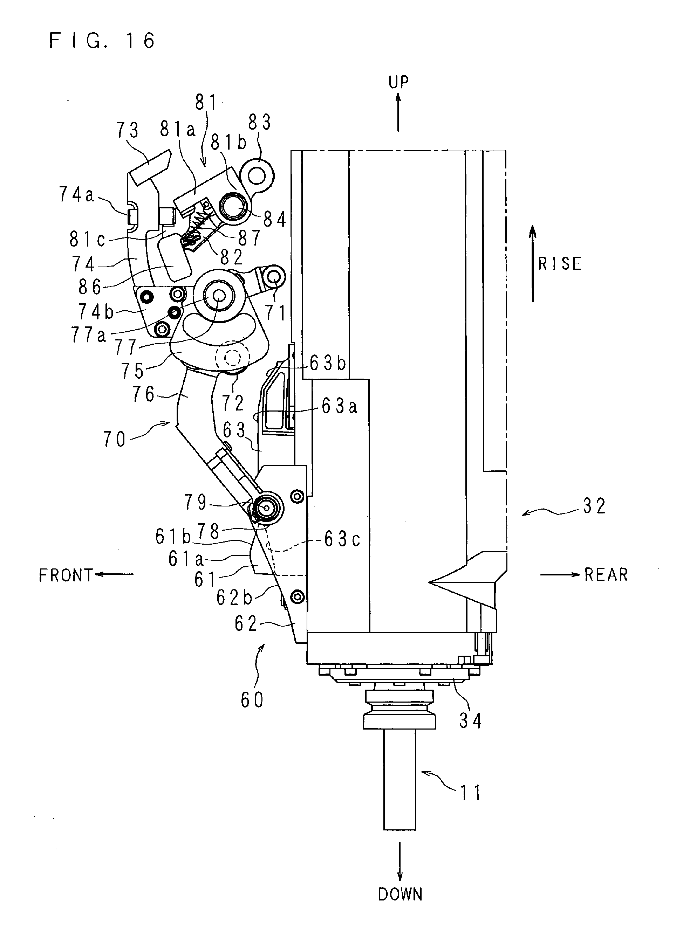

As shown in FIG. 16, when work machining is completed, the tool holder 11 is mounted in the spindle 34. At this time, one of the grip arms 70, 70, ... stands by at the exchange position. No tool holder 11 is gripped by the grip arm 70. The arm section 76 orients the holding cylinders 78 and 78 downward.

The first cam follower 71, the second cam follower 72, and the positioning cam follower 83 do not make contact with the approaching cam 61, the separating cam 62, and the positioning cam 63. The positioning cam follower 83 protrudes rearward and obliquely upward from the rotation shaft 84 so as to be opposed to the upper cam face 63b. The first cam follower 71 protrudes rearward and obliquely upward from the arm shaft 77 so as to be opposed to the cam face 61b. The first cam follower 71 is located on the rear side of the positioning cam follower 83. The second cam follower 72 is located on the front side of the positioning cam follower 83, and the position of the rear end of the second cam follower 72 in the front-rear direction is approximately equal to the position of the apex section 62a.

The rotation rod 82 protrudes forward and obliquely downward from the rotation shaft 84, and each positioning piece 86 is located forwardly and obliquely upwardly of the arm shaft 77.

A lock mechanism (not shown) is provided between the arm section 76 and the guide plates 75, 75. The lock mechanism has: a first locked state where the arm section 76 maintains its posture in which the holding cylinders 78, 78 are brought downward (i.e., the posture of the arm section 76 shown in FIG. 16); and a second locked state described later. When the first cam follower 71 abuts against the approaching cam 61 and the arm section 76 is rocked rearward with respect to the guide plates 75, 75, the arm section 76 is rotated by a force received from the approaching cam 61 via the first cam follower 71, thus unlocking the first locked state. Upon unlocking of the first locked state, the lock mechanism makes a transition to the second locked state. After machining has been completed, the spindle head 32 rises from a machining position toward a conveyance position through the exchange position (see the arrow in FIG. 16). The conveyance position is a position at which the grip arm 70 does not interfere with the spindle head 32 even when the grip arm 70 is conveyed by the tool magazine 40.

While the spindle head 32 rises, the positioning cam follower 83 makes contact with the upper cam face 63b of the positioning cam 63. As shown in FIG. 17, as the spindle head 32 rises, the positioning cam follower 83 moves downward on the upper cam face 63b of the positioning cam 63. Since the height of the upper cam face 63b of the positioning cam 63 increases in the downward direction from its upper end, the positioning cam 63 exerts a forward force to the positioning cam follower 83. By this force, the rotation rod 82 is rotated counterclockwise (see the arrow shown in FIG. 17) around the rotation shaft 84 against the elastic forces of the springs 87 and 87. The positioning pieces 86 and 86 are opposed to both end sections of the arm shaft 77 so as to hold the arm shaft 77 therebetween in the axial direction.

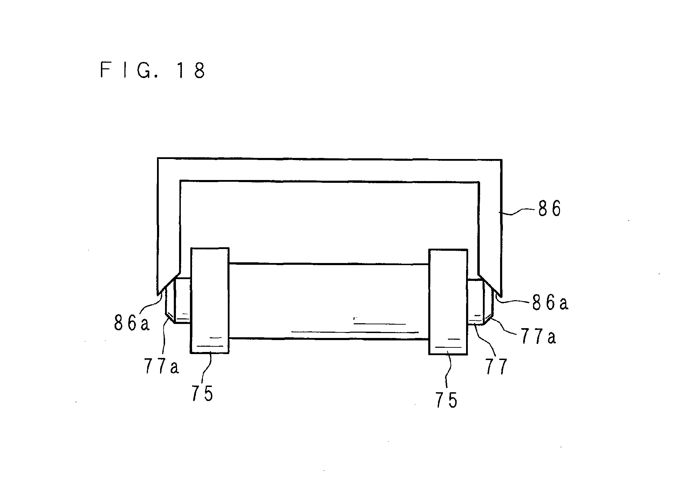

As shown in FIG. 18, when the position of the arm shaft 77 deviates from a predetermined position (the position in which the spindle 34 is aligned with the arm shaft 77 during tool exchange) in the axial direction (the left-right direction), the inclined face 86a of the positioning piece 86 makes contact with the taper 77a of the arm shaft 77, whereby a force is exerted to the arm shaft 77 in the axial direction. While the grip arm 70 is supported by the rail base 41b to which the base 81 is secured (see FIG. 6), the positioning of the arm shaft 77 in the axial direction is completed.

Since the positioning pieces 86 and 86 make contact with the arm shaft 77 as indicated by a hollow arrow shown in FIG. 17, the force exerted rearward and obliquely downward is applied to the entire grip arm 70, and the positioning pin 74a makes contact with the pin receiving section 81c. The tip end of the positioning pin 74a makes contact with a portion of the pin receiving section 81c that is oriented in parallel with the up-down direction. The lower section of the positioning pin 74a makes contact with a portion of the pin receiving section 81c that is oriented in parallel with the front-rear direction. Hence, the grip arm 70 is positioned in the up-down direction and the front-rear direction. The first cam follower 71 is located on the cam face 61b of the approaching cam 61. The second cam follower 72 is located on the cam face 62b of the separating cam 62.

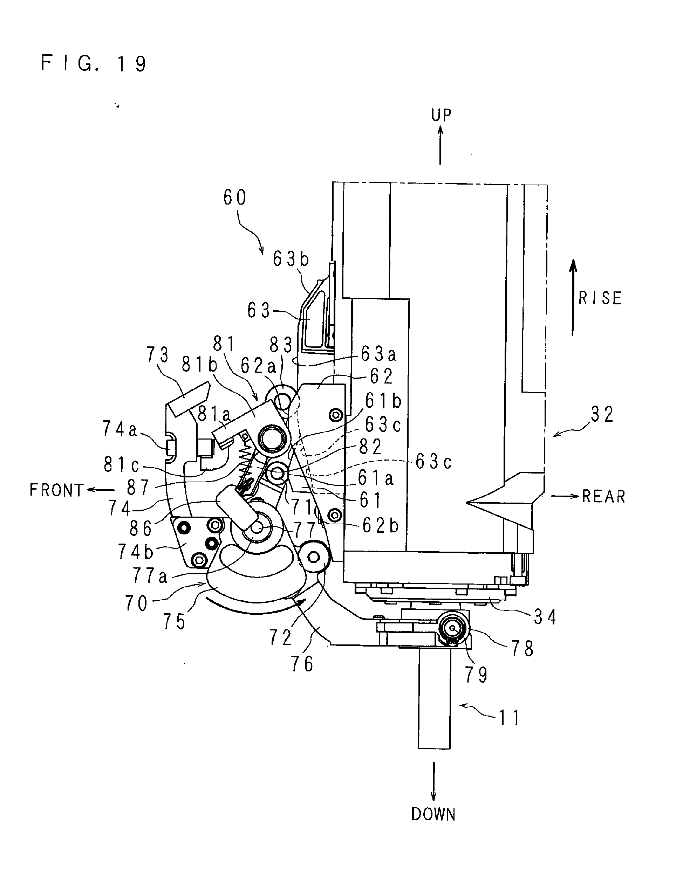

As indicated by the arrows shown in FIGS. 17 and 19, after the positioning of the grip arm 70 in the axial direction of the arm shaft 77 is completed, the spindle head 32 in which the tool holder 11 (tool) is mounted is raised further. The first cam follower 71 moves downward on the cam face 61b of the approaching cam 61. Since the height of the cam face 61b increases in the downward direction from its upper end in a tapered shape, the approaching cam 61 exerts a forward force to the first cam follower 71, and the grip arm 70 is rocked counterclockwise around the arm shaft 77 serving as the center of the rocking. The grip pin units 79 and 79 get close to the tool holder 11. The pins 79b and 79b of the grip pin units 79 and 79 are fitted into the groove 11a of the tool holder 11, whereby the grip arm 70 grips the tool holder 11. The positioning cam follower 83 moves on the flat section 63a of the positioning cam 63, the positioning cam 63 exerts a forward force to the positioning cam follower 83 and the grip arm 70 is maintained the positioning of the arm shaft 77 in the axial direction. The second cam follower 72 moves on the cam face 62b. Since the height of the cam face 62b decreases in the downward direction in a tapered shape, the separating cam 62 does not exert any forward force to the second cam follower 72.

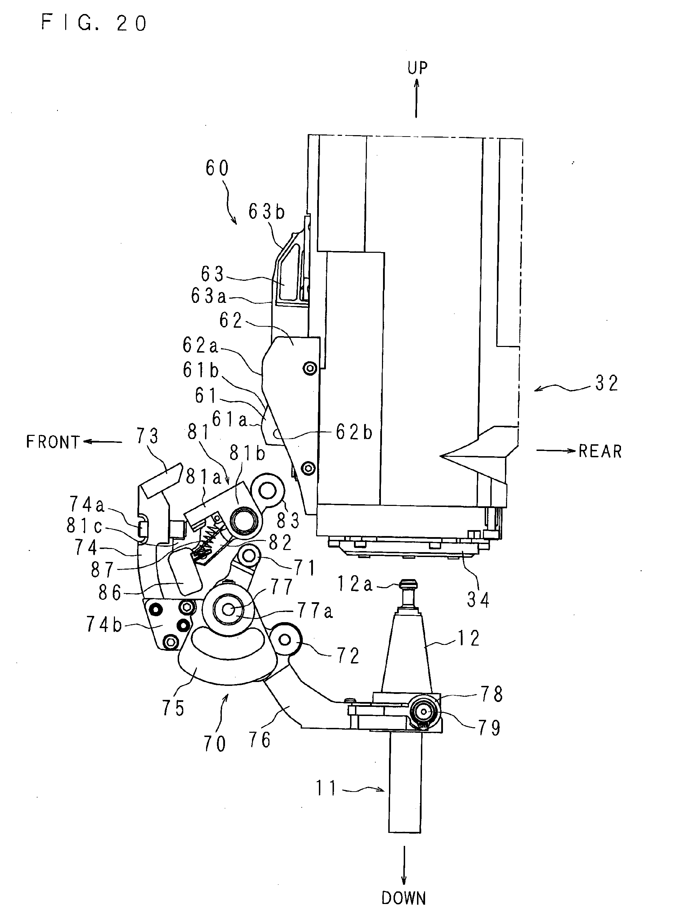

As shown in FIG. 20, after the grip arm 70 has gripped the tool holder 11, the spindle head 32 reaches the conveyance position and the tool holder 11 is removed from the spindle 34. The first cam follower 71, the second cam follower 72, and the positioning cam follower 83 get away from the approaching cam 61, the separating cam 62, and the positioning cam 63. The rotation rod 82 is rotated clockwise by the elastic restoring forces of the springs 87 and 87.

The above-described lock mechanism has the second locked state where the arm section 76 maintains its posture in which the holding cylinders 78, 78 are brought rearward (i.e., the posture of the arm section 76 shown in FIG. 20). After the spindle head 32 has reached the conveyance position, the tool magazine 40 conveys the grip arm 70 gripping the other tool holder 11 to the exchange position. Even when the grip arm 70 is moved by a rotation of the tool magazine 40, locking of the arm section 76 by the lock mechanism (i.e., the second locked state) is not unlocked, and the grip arm 70 can maintain its posture.

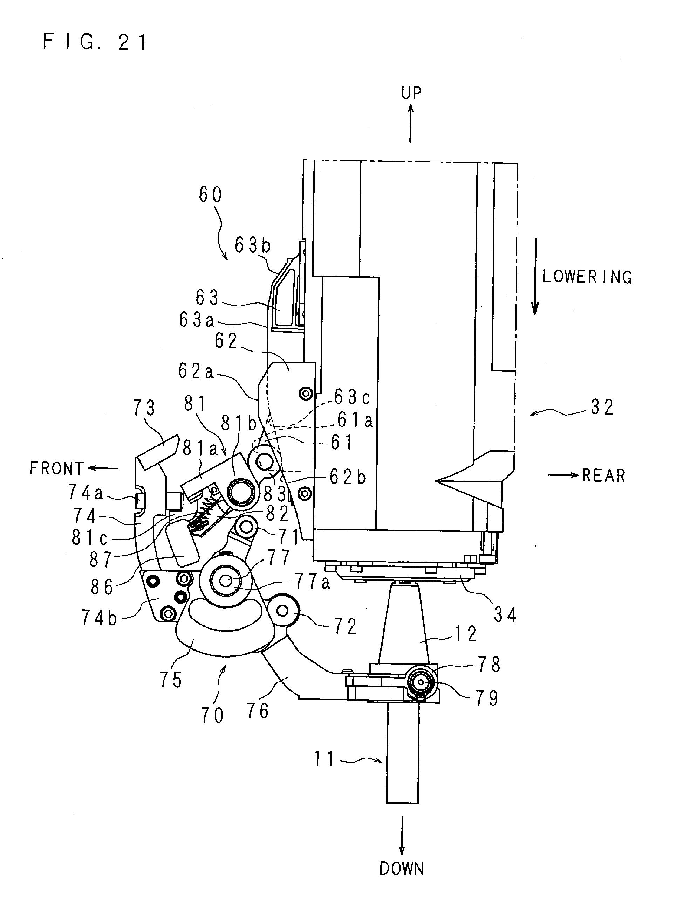

As indicated by the arrow shown in FIG. 21, after grip arm 70 having gripped the other tool holder 11 is conveyed to the exchange position, the spindle head 32 starts lowering. The positioning cam follower 83 makes contact with the lower end section of the positioning cam 63. As shown in FIG. 18, while the spindle head 32 lowers, the positioning cam follower 83 moves upward on the lower cam face 63c of the positioning cam 63. Since the height of the lower cam face 63c increases in the upward direction from its lower end, the positioning cam 63 exerts a forward force to the positioning cam follower 83.

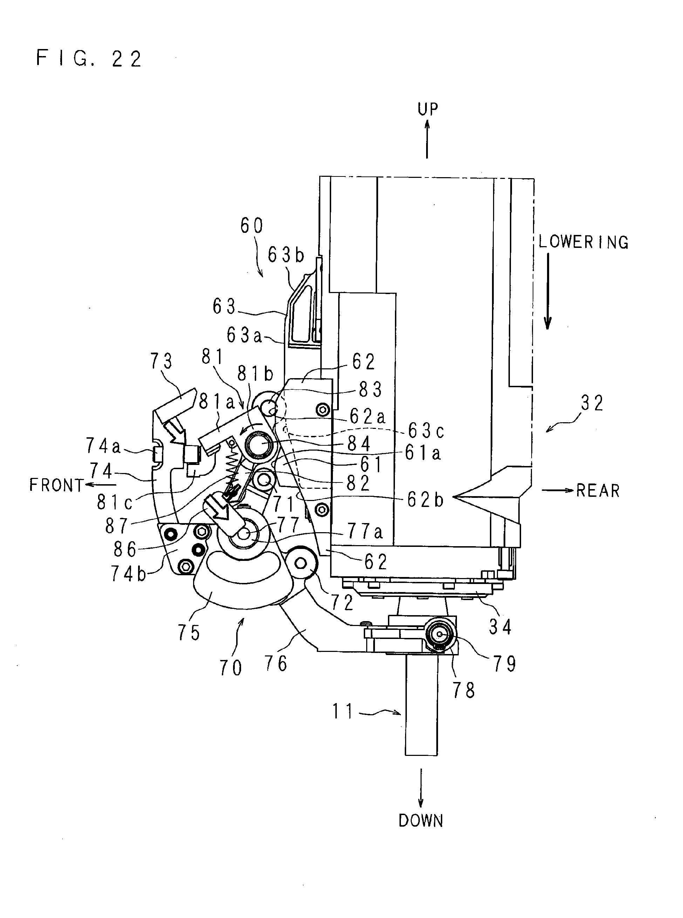

As shown in FIG. 22, the spindle head 32 lowers further. As indicated by the hollow arrow shown in FIG. 22, the rotation rod 82 is rotated counterclockwise around the rotation shaft 84 against the elastic forces of the springs 87 and 87. The positioning pieces 86 and 86 are opposed to both end sections of the arm shaft 77 so as to hold the arm shaft 77 therebetween in the axial direction. As described above, the positioning of the grip arm 70 is completed in the axial direction of the arm shaft 77.

When the grip arm 70 is conveyed by rotating the tool magazine 40 so that the grip arm 70 is placed at the exchange position, for example, the grip arm 70 may sometimes be positioned at a position deviating from the exchange position due to the accumulated dimensional tolerance of the link members 44, 44, ... The base 81 is secured to the rail base 41b, and the grip arm 70 is mounted on the moving carriage 43 so that the arm shaft 77 is oriented along the rail 41c. Hence, the deviation in the direction along the rail 41c can be eliminated and the position of the grip arm 70 can be aligned with that of the spindle 34 by performing the positioning of the arm shaft 77 in the axial direction using the positioning pieces 86 and 86.

Since the positioning pieces 86 and 86 make contact with the arm shaft 77 as indicated by a hollow arrow shown in FIG. 22, the force exerted rearward and obliquely downward is applied to the entire grip arm 70, and the positioning pin 74a makes contact with the pin receiving section 81c. The tip end of the positioning pin 74a makes contact with the portion of the pin receiving section 81c that is oriented in parallel with the up-down direction. The lower section of the positioning pin 74a makes contact with the portion of the pin receiving section 81c that is oriented in parallel with the front-rear direction. Hence, the grip arm 70 is positioned in the up-down direction and in the front-rear direction.

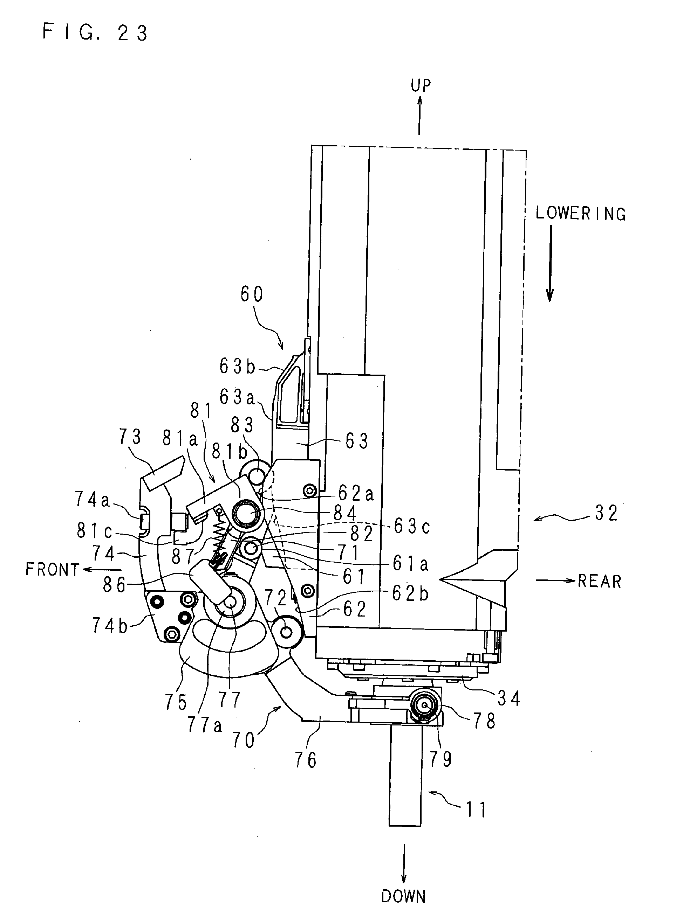

As shown in FIG. 23, after the positioning of the grip arm 70 is completed, the spindle head 32 lowers further. At this time, the tool holder 11 gripped by the grip arm 70 is mounted in the spindle 34. The second cam follower 72 makes contact with the lower end section of the separating cam 62. The first cam follower 71 makes contact with the apex 61a. The positioning cam follower 83 makes contact with the flat section 63a. The positioning cam 63 exerts a forward force on the positioning cam follower 83, and the grip arm 70 maintains axial positioning of the arm shaft 77.

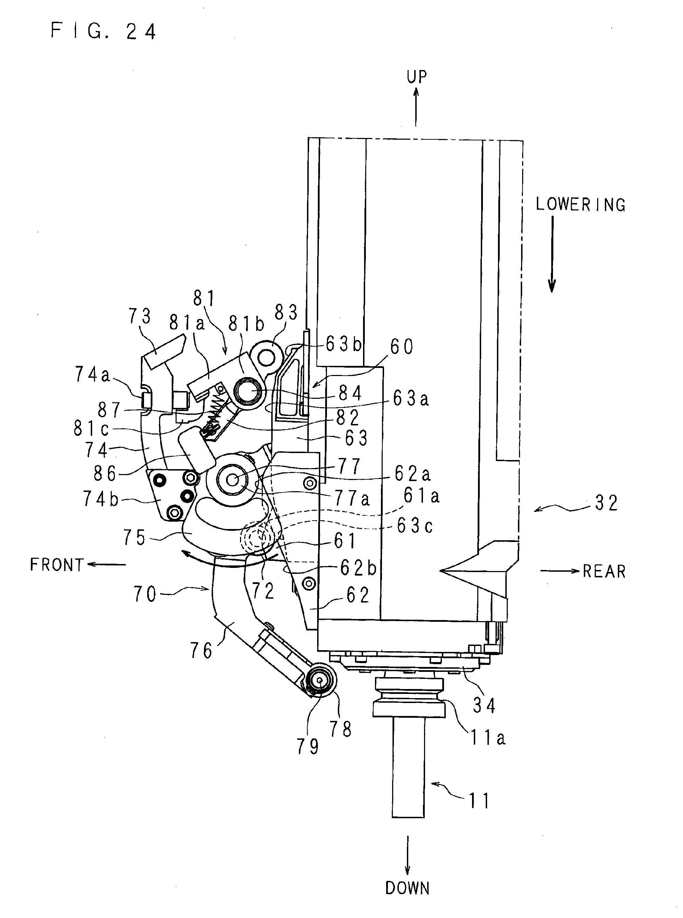

As shown in FIG. 24, the spindle head 32 lowers further. As the spindle head 32 lowers, the second cam follower 72 moves upward on the cam face 62b of the separating cam 62. Since the height of the cam face 62b increases in the upward direction from the lower end in a tapered shape, the separating cam 62 exerts a forward force to the second cam follower 72. As indicated by the arrow shown in FIG. 24, the grip arm 70 is rocked clockwise around the arm shaft 77 serving as the center of the rocking, and the grip pin units 79 and 79 are separated from the tool holder 11. The locking of the above-described lock mechanism in the second locked state is unlocked, and the lock mechanism makes a transition to the first locked state.

The first cam follower 71 moves upward on the cam face 61b. Since the height of the cam face 61b lowers in the upward direction in a tapered shape, the approaching cam 61 does not exert any forward force to the first cam follower 71. The positioning cam follower 83 moves upward on the upper cam face 63b. Since the height of the upper cam face 63b lowers in the upward direction in a tapered shape, the positioning cam 63 does not exert any forward force to the positioning cam follower 83.

The spindle head 32 in which the tool holder 11 is mounted lowers further and moves toward the machining position. The grip arm 70 is rocked further clockwise, and the grip pin units 79 and 79 get away from the spindle head 32, whereby the grip arm 70 does not interfere with the spindle head 32. The first cam follower 71, the second cam follower 72, and the positioning cam follower 83 get away from the approaching cam 61, the separating cam 62 and the positioning cam 63. The above-described lock mechanism is returned to the first locked state, and the grip arm 70 (arm section 76) takes the posture shown in FIG. 16.

In the machine tool 100 according to the present embodiment, a plurality of the moving carriages 43, 43, ..., connected to each other in an endless manner, each have the base plate 46, and the engaging part 45 is located between ends of the base plate 46 in the moving direction so as to be engaged and interlocked with the gear 51. The gear 51 drives the plurality of moving carriages 43, 43, ... in a circulatory manner. The base plate 46 holds a plurality of the tool holders 11 (tools) so that the tool holders 11 (tools) are arranged in the moving direction. Hence, the number of the moving carriages 43, 43, ... connected to each other in an endless manner is reduced, and the number of links is reduced. Since the number of links is reduced, the number of components necessary for the links is reduced, thereby cutting down manufacturing cost and reducing errors that occur in each link. Even when the chain section 42 is increased in length in order to hold a large number of tools and the chain section 42 is circulated at a high speed, the machine tool can suppress an increase in the number of components necessary for the links and an increase in the number of breakdown locations, thus making it possible to improve durability of the chain section 42 and to suppress noise caused by fluttering of the links.

The engaging part 45 is formed by a plurality of the pins 49, 49, ... provided on the base plate 46. The plurality of pins 49, 49, ... are engaged and interlocked with the gear 51, and each moving carriage 43 moves along the rail 41c.

A plurality of pins 49, 49, ... are provided on the same arc (i.e., the arc R in FIG. 10) of the base plate 46. When the moving carriage 43 is located at a semicircular region of the rail 41c, the arc R is defined as an arc concentric with the semicircle, and the plurality of pins 49, 49, ... are located so as to be arranged on a circumference. Hence, the pins 49, 49, ... of a plurality of the moving carriages 43, 43, ... located at an arc-shaped region of the rail 41c can be arranged on the same arc concentric with the arc-shaped region. The gear 51 is located inwardly of the arc-shaped region of the rail 41c, and engaged with the pins 49, 49, ... arranged on the same arc. As long as the pins 49 are provided on the arc R, the number of the pins 49, 49, ... may be two or three or more. When the moving carriage 43 holds a plurality of the tool holders 11 (tools), the size of the moving carriage 43 in the moving direction (i.e., the direction in which the moving carriage 43 moves along the rail 41c) is increased; therefore, the three or more pins 49, 49, ... may preferably be provided in accordance with one pitch of the gear 51. When the three or more pins 49, 49, ... are provided on the single moving carriage 43, the arc R is uniquely determined.

The engaging part 45 includes the flange 49a connecting tips of the pins 49, 49, .... The tips of the pins 49, 49, ... are connected to each other through the flange 49a, thus achieving an increase in strength.

The engaging part 45 has the five or more pins 49, 49, ... located on the same arc R, and the connecting shaft members 49b, 49b for the adjacent moving carriages 43 are provided on the pins 49 other than the outermost pins 49. In the present embodiment, the number of the pins 49, 49, ... is six, and the connecting shaft members 49b, 49b are provided on the second pins 49 from the outermost pins 49. As for a distance on a path connecting the connecting shaft members 49b at one side of the moving direction of the two moving carriages 43, 43 adjacent to each other (which will hereinafter be referred to as an "inter-connecting shaft member distance"), the distance measured when the moving carriages 43, 43 are located on a straight line and the distance measured when the moving carriages 43, 43 are located on an arc have a smaller difference compared with a case where the connecting shaft members 49b for the adjacent moving carriages are provided on the outermost pins 49.

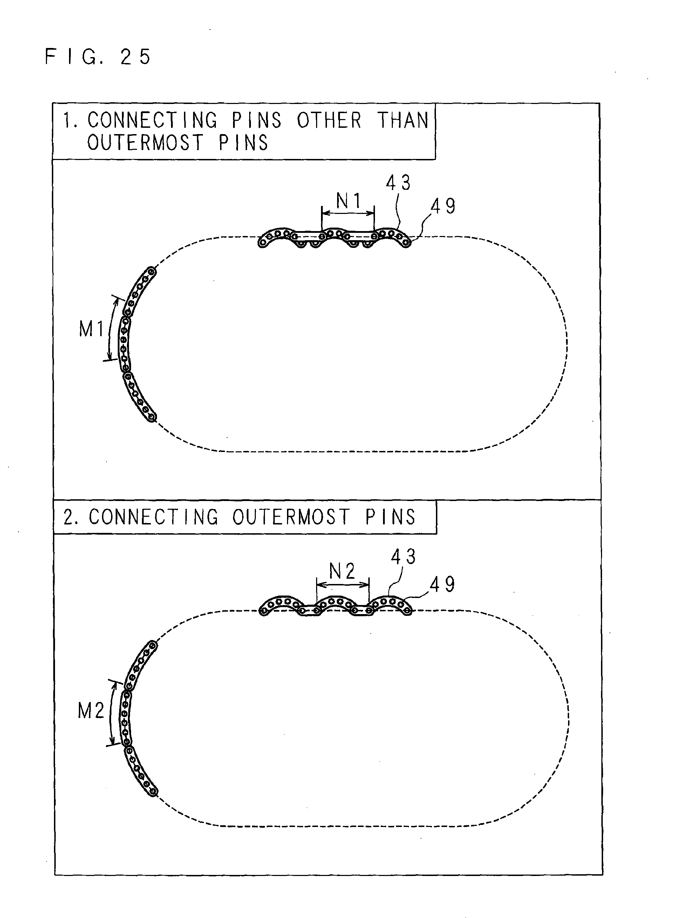

As shown in FIG. 25, in Case 1, of a plurality of the pins 49, a connection is made between the pins other than the outermost pins, and in Case 2, of a plurality of the pins 49, a connection is made between the outermost pins. In Case 1, the distance on a path connecting the connecting shaft members 49b at one side of the movement direction of the two moving carriages 43, 43 adjacent to each other (i.e., the inter-connecting shaft member distance) is M1 on an arc, and is N1 on a straight line. In Case 2, the inter-connecting shaft member distance is M2 on an arc, and is N2 on a straight line. Suppose that the pins 49, 49, ... are arranged at even intervals in accordance with the pitch of the gear 51 in consideration of engagement of the pins 49, 49, ... with the gear 51; then, in both of Cases 1 and 2, all the pins 49, 49, ... are arranged at even intervals on the arc, and therefore, M1 = M2. In order to arrange all the pins 49, 49, ... at even intervals on the arc, the values of N1 and N2 are different.

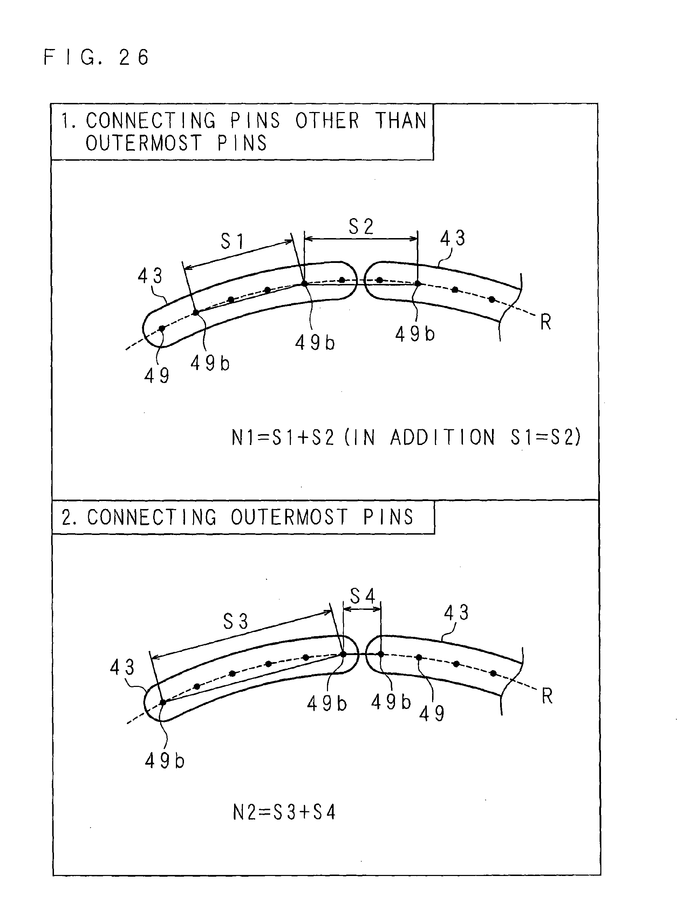

As shown in FIG. 26, in consideration of the fact that all the pins 49, 49, ..., provided on each moving carriage 43 located at the arc R region, are arranged at even intervals, the inter-connecting shaft member distance N1 on the straight line in Case 1 can be calculated as the sum of straight line distances S1 and S2 (= S1) each measured between the outermost ones of the four continuous pins 49 on the arc R, and therefore, N1 = S1 + S2. The inter-connecting shaft member distance N2 on the straight line in Case 2 can be calculated as the sum of: a straight line distance S4 measured between the two continuous pins 49 on the arc R; and a straight line distance S3 measured between the outermost ones of the six continuous pins 49 on the arc R, and therefore, N2 = S3 + S4. An example in which calculations are performed using specific numerical values will be described below. Suppose that an arc-shaped region of the rail 41c has a radius of 300 mm; then, when the moving carriage 43 is located at the arc-shaped region, the six pins 49, 49, ... are arranged on the arc-shaped region, and a distance between axial centers of the pins 49, 49 adjacent to each other is 35 mm. As a result of calculations, (M1 - N1) = 1.1 mm, and (M2 - N2) = 2.5 mm. In consideration of the fact that M1 = M2, there is established the following relationship: N2 < N1 < M1 = M2, and the difference obtained by the subtraction (M1 - N1) is smaller than the difference obtained by the subtraction (M2 - N2). Hence, in Case 1, a difference between the distance measured on the arc and the distance measured on the straight line can be further reduced, and extension and contraction of the inter-connecting shaft member distance, which occur when the moving carriage 43 is circulated along a circulatory path, can be further reduced as compared with Case 2. When the extension and contraction of the distance are increased, a large internal load is applied between the moving carriages 43, and the internal load impedes circulation of the moving carriages 43.

The following description will be made on a case where the number of the pins is five. In Case 1, the connecting shaft members 49b are located on the second pins 49 from the outermost ones of the five pins 49, 49, .... Similarly to the above example, suppose that the arc-shaped region of the rail 41c has a radius of 300 mm; then, when the moving carriage 43 is located at the arc-shaped region, the five pins 49, 49, ... are arranged on the arc-shaped region, and a distance between axial centers of the pins 49, 49 adjacent to each other is 35 mm. When calculations are performed using specific numerical values, (M1 - N1) = 0.7 mm, and (M2 - N2) = 1.3 mm. In Case 1 in which a connection is made between the pins 49 other than the outermost pins 49, a difference between the distance measured on the arc and the distance measured on the straight line can be further reduced, and extension and contraction of the inter-connecting shaft member distance, which occur when the moving carriage 43 is circulated along a circulatory path, can be further reduced as compared with Case 2. As indicated by the above two examples, when the five or more pins 49, 49, ... are provided on each moving carriage 43, extension and contraction of the inter-connecting shaft member distance are reduced by making a connection between the pins other than the outermost ones of the plurality of pins 49. Hence, the machine tool 100 allows the moving carriages 43 to be driven smoothly in a circulatory manner.

The rail 41c and the chain section 42 are located along an elliptical region surrounding: the spindle head 32; and the column 28 for supporting the spindle head 32 so that the spindle head 32 is vertically movable. The chain section 42 is located along the elliptical region surrounding the spindle head 32 and the column 28, thus preventing the chain section 42 from being moved away from the spindle head 32 and the column 28. The chain section 42 is located so as to surround the spindle head 32 and the column 28, thereby making it possible to increase the chain section 42 in length and to increase the number of tools held by a plurality of the moving carriages 43, 43, ....

## Claims

1. A machine tool including:
a tool magazine (40) holding tools (11) by each of a plurality of moving bodies (43) connected to each other in an endless manner and moved along a given circulation path; and
a spindle (32) in which the tool, held by one of the plurality of moving bodies (43), is mounted to machine a work,
a rotation gear (51) for driving the plurality of moving bodies (43) in a circulatory manner,
the machine tool further comprising a supporter (28) for supporting the spindle (32) so that the spindle (32) is movable in one axial direction.
**characterized in that**
the moving bodies (43) each have a holder (46) holding a plurality of tools so that the tools are arranged in a moving direction;
an engaging part (45) is located between ends of the holder (46) in the moving direction so as to be engaged and interlocked with the rotation gear (51),
wherein the plurality of moving bodies (43) are located along an elliptical region surroundin the spindle (32) and the supporter (28).

2. A machine tool according to Claim 1, **characterized in that** the engaging part is formed by a plurality of shaft members (49) provided on the holder (46).

3. A machine tool according to Claim 2, **characterized in that** the engaging part is formed by the plurality of shaft members each provided on an arc on the holder (46).

4. A machine tool according to Claim 3, **characterized in that** the engaging part is formed by the five or more shaft members, and connectors (44) connecting the adjacent moving bodies (43) are provided on the shaft members other than outermost ones of the shaft members.

5. A machine tool according to Claim 4, **characterized in that** the engaging part is formed by the six shaft members provided at even intervals on the arc, and the connectors (44) are provided on the second shaft members from the outermost ones of the shaft members.

6. A machine tool according to any one of Claims 2 to 5, **characterized in that** a plate member (49a) connecting tips of the shaft members is provided for each of the moving bodies.

## Patentansprüche

1. Bearbeitungswerkzeug mit:
einem Werkzeugmagazin (40), das Werkzeuge (11) jeweils durch einen von vielen Bewegungskörpern (43) hält, die endlos miteinander verbunden sind und entlang eines vorgegebenen Zirkulationspfades bewegt werden; und
einer Spindel (32), in der das Werkzeug, das durch einen der vielen Bewegungskörper (43) gehalten ist, angebracht ist, um ein Werkstück zu bearbeiten,
einem Drehzahnrad (51) zum Antreiben der vielen Bewegungskörper (43) in einer zirkulierenden Weise,
wobei das Bearbeitungswerkzeug des Weiteren eine Stützvorrichtung (28) zum Stützen der Spindel (32) aufweist, so dass die Spindel (32) in einer axialen Richtung bewegbar ist,
**dadurch gekennzeichnet, dass**
die Bewegungskörper (43) jeweils einen Halter (46) haben, der viele Werkzeuge so hält, dass die Werkzeuge in einer Bewegungsrichtung angeordnet sind;
sich ein Eingriffsteil (45) zwischen Enden des Halters (46) in der Bewegungsrichtung befindet, um so mit dem Drehzahnrad (51) in Eingriff zu gelangen und gekoppelt zu werden,
wobei sich die vielen Bewegungskörper (43) entlang eines elliptischen Bereiches befinden, der die Spindel (32) und die Stützvorrichtung (28) umschließt.

2. Bearbeitungswerkzeug gemäß Anspruch 1, **dadurch gekennzeichnet, dass** der Eingriffsteil durch viele Schaftelemente (49) gebildet ist, die an dem Halter (46) vorgesehen sind.

3. Bearbeitungswerkzeug gemäß Anspruch 2, **dadurch gekennzeichnet, dass** der Eingriffsteil durch die vielen Schaftelemente gebildet ist, die jeweils an einem Bogen des Halters (46) vorgesehen sind.

4. Bearbeitungswerkzeug gemäß Anspruch 3, **dadurch gekennzeichnet, dass** der Eingriffsteil durch fünf oder mehrere Schaftelemente gebildet ist, und dass Verbinder (44), die die angrenzenden Bewegungskörper (43) verbinden, an den Schaftelementen außer den äußersten Schaftelementen vorgesehen sind.

5. Bearbeitungswerkzeug gemäß Anspruch 4, **dadurch gekennzeichnet, dass** der Eingriffsteil durch sechs Schaftelemente gebildet ist, die in gleichmäßigen Intervallen an dem Bogen vorgesehen sind, und dass die Verbinder (44) an den zweiten Schaftelementen von den äußersten Schaftelementen vorgesehen sind.

6. Bearbeitungswerkzeug gemäß einem der Ansprüche 2 bis 5, **dadurch gekennzeichnet, dass** ein Plattenelement (49a), das Spitzen der Schaftelemente verbindet, für jeden Bewegungskörper vorgesehen ist.

## Revendications

1. Machine-outil comprenant :
un magasin à outils (40) maintenant des outils (11) au moyen de chacun d'une pluralité de corps mobiles (43) reliés entre eux de manière continue et déplacés le long d'une trajectoire de circulation donnée ; et
une broche (32) dans laquelle l'outil, maintenu par l'un de la pluralité de corps mobiles (43), est monté pour usiner un ouvrage,
un engrenage de rotation (51) pour entraîner la pluralité de corps mobiles (43) d'une manière circulatoire,
la machine-outil comprenant en outre un élément de support (28) pour supporter la broche (32) de sorte que la broche (32) soit mobile dans une direction axiale ;
**caractérisée en ce que**
les corps mobiles (43) possèdent chacun un élément de maintien (46) maintenant une pluralité d'outils de telle sorte que les outils soient agencés dans une direction mobile ;
une partie de mise en prise (45) est située entre les extrémités de l'élément de maintien (46) dans la direction mobile, de sorte à être en prise et interverrouillée avec l'engrenage de rotation (51),
dans laquelle la pluralité de corps mobiles (43) sont situés le long d'une région elliptique entourant la broche (32) et l'élément de support (28).

2. Machine-outil selon la revendication 1, **caractérisée en ce que** la partie de mise en prise est formée par une pluralité d'éléments formant axes (49) prévus sur l'élément de maintien (46).

3. Machine-outil selon la revendication 2, **caractérisée en ce que** la partie de mise en prise est formée par la pluralité d'éléments formant axes, chacun étant prévu sur un arc de l'élément de maintien (46).

4. Machine-outil selon la revendication 3, **caractérisée en ce que** la partie de mise en prise est formée par les cinq éléments formant axes ou plus, et des connecteurs (44) reliant les corps mobiles adjacents (43) sont prévus sur les éléments formant axes autres que les éléments formant axes les plus à l'extérieur.

5. Machine-outil selon la revendication 4, **caractérisée en ce que** la partie de mise en prise est formée par les six éléments formant axes placés à intervalles réguliers sur l'arc, et les connecteurs (44) sont placés sur les seconds éléments formant axes à partir des éléments formant axes les plus à l'extérieur.

6. Machine-outil selon l'une quelconque des revendications 2 à 5, **caractérisée en ce qu'**un élément formant plaque (49a) reliant les extrémités des éléments formant axes est prévu pour chacun des corps mobiles.
